# EUROPÄISCHE PATENTSCHRIFT

(11) **EP 1 818 250 B1**
(45) Veröffentlichungstag und Bekanntmachung des Hinweises auf die Patenterteilung: **20.04.2016**
(21) Anmeldenummer: 07002806.3
(22) Anmeldetag: 09.02.2007
(51) Int. Cl.: B62K 25/28, B62K 25/08

(54) **Geregeltes aktives-passives Schwingungsabsorbtionsgerät mit Energierückgewinnung für Zweiräder**
Regulated active-passive vibration absorption device with energy recovery for two wheelers
Appareil d'absorption d'oscillations actif-passif réglé doté d'un gain d'énergie pour deux roues

(30) Priorität: 10.02.2006 DE 102006006482
(43) Veröffentlichungstag der Anmeldung: 15.08.2007
(73) Patentinhaber: Fludicon GmbH, 64293 Darmstadt (DE); Storck Bicycle GmbH, 65520 Bad Camberg (DE)
(72) Erfinder: Stork, Michael, Dipl.-Ing., 64291 Darmstadt (DE); Allgaier, Alexander, Dipl.-Ing., 64283 Darmstadt (DE); Kräemer, Manfred, Dipl.-Ing., 64853 Otzberg (DE); Rosenfeldt, Horst, Dr., 64846 Groß-Zimmern (DE); Storck, Markus, 65540 Idstein (DE)
(74) Vertreter: Behrens, Helmut

(56) Entgegenhaltungen:
- EP-A- 1 394 439
- WO-A-94/17317
- WO-A-98/22727
- JP-A- H07 246 967
- US-A- 3 006 656
- US-A1- 2004 195 062
- US-B1- 6 471 018

## Beschreibung

Fahrräder mit Federdämpfersystemen sind seit einiger Zeit üblich, da sie nicht nur die Sicherheit sondern auch den Komfort erhöhen. Bei diesen bekannten Federdämpfersystemen für Zweiräder werden beispielsweise Hydraulikstoßdämpfer eingesetzt, wobei die Dämpfungskraft über federbelastete Drosseln oder Blenden erzeugt wird und einstellbar ist.

Aus der gattungsgemäßen EP 1 394 439 A2 ist ein geregeltes aktives-passives Schwingungsabsorptionssystem für Zweiräder bekannt; das Absorptionssystem besteht aus mindestens einen als Dämpferkartusche ausgebildeten Schwingungsdämpfer auf Basis von elektro-/magnetorheologischen Flüssigkeiten. Die Dämpferkartusche ist als Einrohrdämpfer mit in einem Zylindergehäuse verschiebbar gelagertem Kolben mit Kolbenstange ausgebildet, und das elektro-/magnetorheologische Ventil (ERF- Ventil bzw. MRF-Ventil) ist in der Dämpferkartusche integriert. Das bekannte System weist einen Systemregelkreis auf, dem Sensorsignale zugeführt werden und der Steuersignale an ein elektrisches Hochspannungsnetzteil liefert; das Hochspannungsnetzteil stellt die entsprechende Steuerenergie für das elektro-/magnetorheologische Ventil der Dämpferkartusche bereit. Ferner besitzt das System eine Versorgungseinheit, in der die elektrische Energie zum Betreiben des Schwingungsabsorptionssystems gespeichert ist, und die Dämpferkartusche ist in die Vorderradgabel integriert. Das bekannte Absorptionssystem weist aber keine Energierückgewinnungseinheit auf.

In der US 6,471,018 B1 ist ein geregeltes aktives-passives Schwingungsabsorptionssystem für Zweiräder offenbart. Das Absorptionssystem besteht ebenfalls aus mindestens einen als Dämpferkartusche ausgebildeten Schwingungsdämpfer auf Basis von elektro-/magnetorheologischen Flüssigkeiten, wobei die Dämpferkartusche als Einrohrdämpfer mit in einem Zylindergehäuse verschiebbar gelagertem Kolben mit Kolbenstange ausgebildet ist. Das elektro-/magnetorheologische Ventil ist in der Dämpferkartusche integriert und mit einer Versorgungseinheit zum Bereitstellen elektrischer Energie verbunden. Wie bei dem aus der EP 1 394 439 A2 bekannte Schwingungssystem findet keine Energierückgewinnung statt.

Durch die US 2004/0195062 A1 gehört ein geregeltes aktives-passives Schwingungsabsorptionssystem zum Stand der Technik, das aus mindestens einen als Dämpferkartusche ausgebildeten Schwingungsdämpfer auf Basis von elektro-/magnetorheologischen Flüssigkeiten besteht. Die Dämpferkartusche ist ebenfalls als Einrohrdämpfer mit in einem Zylindergehäuse verschiebbar gelagertem Kolben mit Kolbenstange ausgebildet, und das elektro-/magnetorheologische Ventil ist in der Dämpferkartusche integriert. Das System weist einen Systemregelkreis auf, dem Sensorsignale zugeführt werden und der Steuersignale an ein elektrisches Hochspannungsnetzteil liefert; das Hochspannungsnetzteil stellt die entsprechende Steuerenergie für das elektro-/magnetorheologische Ventil der Dämpferkartusche bereit. Ferner besitzt das System eine Versorgungseinheit, in der die elektrische Energie zum Betreiben des Schwingungsabsorptionssystems gespeichert ist, und der Strömungskanal ist zwischen Kolbenaußenfläche und Zylinderinnenwandung angeordnet. Das aus dieser US-Offenlegungsschrift bekannte Schwingungsdämpfersystem ist nicht für den Einsatz bei Zweirädern vorgesehen und besitzt keine Energierückgewinnungseinheit, welche kinetische Energie in elektrische Energie umwandelt.

Aus der DE 102 40 568 A1 ist ein Stoßdämpfungssystem für Zweiräder bekannt, wobei das Stoßdämpfungssystem auf Basis elektro- und/oder magnetorheologischer Flüssigkeiten realisiert ist. Das Stoßdämpfungssystem ist dabei beispielsweise zwischen gefederten und ungefederten Teilen angeordnet und umfasst in mindestens einer Arbeitskammer eines Zylinders eine als Druckmittel vorgesehene elektro- und/oder magnetorheologische Flüssigkeit. Bei einer Relativbewegung zwischen Kolben und Zylinder durchströmt die elektro- oder magnetorheologische Flüssigkeit ein Ventil auf Basis von elektro- und/oder magnetorheologischer Flüssigkeit. Bei dem bekannten System werden über Sensoren Messsignale ermittelt und zur Ansteuerung bzw. Regelung des elektrischen bzw. magnetischen Feldes im Ventil zur Einstellung der Dämpfung verwendet. Durch Ausnutzung der Eigenschaften der elektro- bzw. magnetorheologischen Flüssigkeiten können variable Dämpfungen eingestellt und es können schnelle Reaktionszeiten ermöglicht werden.

Aus der DE 101 23 381 A1 ist weiterhin ein Zweirad mit aktiven Federdämpferelementen bekannt. Hier ist in die Vorderradgabel ein ansteuerbarer/regelbarer Dämpfer auf Basis von elektro-/magnetorheologischer Flüssigkeit integriert. Dieser beruht auf dem Prinzip des Zweirohrdämpfers, wobei zwei Rohre teleskopartig ineinander gesteckt sind. Beim Ein- bzw. Ausfedern beim Fahren wird ein Kolben im Zylinder bewegt, wobei die in den Druckmittelräumen befindliche elektro-/magnetorheologische Flüssigkeit über einen zwischen Zylinderwand und Kolbenaußenfläche gebildeten Ringspalt, der als ERF-Ventil dient, verdrängt wird. Über das elektrische Feld im Bereich des Kolbens lässt sich die Viskosität der elektro- bzw. magnetorheologischen Flüssigkeit einstellen, wodurch die Dämpferkraft geregelt werden kann.

Die Hinterradgabel ist aus aktivem Verbundwerkstoff mit regelbaren Dämpfungseigenschaften ausgestaltet. Vorzugsweise besteht die Hinterradgabel aus Verbundfasern und aus piezoelektrischem Dämpfungsmaterial. Das piezoelektrische Material ist über ein elektrisch leitendes Netzwerk kontaktiert. Aufgrund der Dehnung/Stauchung des Piezomaterials im biegeelastischen Bereich der Hinterradgabel wird hierbei aufgrund des piezoelektrischen Effektes Energie erzeugt, die einer Energieeinheit zugeführt werden kann. Diese Energieeinheit dient ebenfalls als Stromversorgung für den elektro-/magnetorheologischen Dämpfer an der Vorderradgabel.

Aufgabe der vorliegenden Erfindung ist es nun, ein Fahrrad mit einem geregelten aktiven/passiven Schwingungsabsorptionssystem, wie es in der EP 1 394 439 A2 beschrieben ist, derart zu verbessern, dass ein Optimum an Fahrsicherheit, Fahrkomfort und Fahreffektivität erzielbar ist; weiterhin soll sich das Fahrrad mit handelsüblichen Fahrradkomponenten herstellen lassen.

Diese Aufgabe wird durch ein Fahrrad gelöst, das die kennzeichnenden Merkmale des Anspruchs 1 aufweist.

Vorteilhaft ist, dass die Dämpferkartusche als Zylinder/Wendelrohranordnung auf Basis elektro-/magnetorheologischer Flüssigkeiten ausgebildet ist, wobei beim Auftreten von Schwingungen im Bereich der Vorderrad- bzw. Hinterradgabel die dynamischen Belastungen aufgrund der Eigenschaften der elektro-/magnetorheologischen Flüssigkeit schnell und zuverlässig kompensiert werden können. Die Ausbildung als Dämpferkartusche ermöglicht einen integrierten Einbau in vorhandene Rahmenteile. Hierdurch ist auch ein kompakter Aufbau gewährleistet. Hydraulisch betrachtet, liegt eine Einrohrdämpferkartusche vor.

Durch diese Ausgestaltung können die folgenden Anregungsfunktionen damit behandelt werden:
- Strassenbeschaffenheiten (Profil);
- Eigenformen des Fahrzeuges (Rahmen);
- Fahrerverhalten (Sitzen, Wippen);
- Antriebscharakteristik.

Diese vier Anregungsfunktionen werden in einem geschlossenen Regelkreis so behandelt, dass ein Optimum an Fahrsicherheit, Fahrkomfort und Fahreffektivität erreicht wird.

Durch die Abstützung und Führung der Kolbenstange der Dämpferkartusche mittels Stützhülse in den das Zylindergehäuse umgebenden zylindrischen äußeren Rohrabschnitt können nur Längskräfte auf die Kolbenstange übertragen werden. Alle übrigen Kräfte, die nachfolgend als Störkräfte bezeichnet werden, werden von der Zylinder / Kolbenanordnung ferngehalten. Hierdurch kann die Lebensdauer der Bauteile verlängert werden.

Ein weiterer Vorteil der Erfindung liegt darin, dass die in Längsrichtung auf Vorderradgabel bzw. Hinterradgabel einwirkenden Schwingungen genutzt werden und mittels der Energierückgewinnungseinheit in Form einer Tauchspulenanordnung aufgrund der Relativbewegung der Stützhülse und dem zylindrischen Rohrabschnitt Energie gewonnen wird. Somit ist an der Stelle an der die maximalen Störenergien auftreten, die Dämpferkartusche mit Energierückgewinnungseinheit angeordnet, wodurch eine effiziente Energierückgewinnung erfolgt. Diese Energie dient zum Laden der Batterie des Hochspannungsnetzteils.

Bei einer nicht beanspruchten Ausgestaltung des Erfindungsgedankens ist es vorgesehen, dass das Schwingungsabsorptionssystem einen aktiven Dämpfer umfasst. Hierbei ist die Dämpferkartusche über ein Behälter-Pumpen- Speichersystem in ein aktives System zu wandeln, wobei der Ventilspalt zwischen Wendelkolbenaußenfläche und Innenwandung des Zylindergehäuses für die aktive Funktion temporär geschlossen werden muss. Dies ist beispielsweise mittels einer 2-kanaligen elektro-/magnetorheologischen Flüssigkeiten-Spalt-Ansteuerung möglich. Die aktive Funktion ermöglicht eine variable Einstellung des Innendruckes in dem Zylinderraum, wobei hierdurch die Stellung des Kolbens verändert werden kann. Eine Veränderung der Lage der Kolben in dem Zylindergehäuse bezogen auf die beiden Radachsen ermöglicht eine Anpassung der Fahrlage an die äußeren Gegebenheiten entsprechend der Fahrdynamik.

Darüber hinaus besteht ein weiterer Vorteil der Erfindung in der Möglichkeit einer zweiachsigen statt einer einachsigen Sensorik. Damit ist es möglich, bei entsprechender geometrischer Anordnung der Dämpferkartusche auch Störgrößen in Fahrtrichtung zu behandeln.

Weiterhin besteht die Möglichkeit, die Sensoreigenschaften der Flüssigkeit selbst zur Regelung der Einflussgröße zu benutzen. Diese Sensoreigenschaften beruhen auf dem Prinzip, dass bei Druckerhöhung die Ströme im mA Bereich proportional ansteigen. Diese Sensoreigenschaften sind in der DE 36 09 861 A1 ausführlich erläutert.

Mittels eines derartigen Reglers lassen sich dann die Messgrößen "Beschleunigung, Strassenzustand", "Schwellenüberfahrt", "Querbeschleunigung Rahmen" und "Fahrraddynamik (Sitzen, Stehen, Wippen) verknüpfen und als Stellsignale an den Spannungs-/Stromstärkecontroller weitergeben. Ein solcher Echtzeit-Regelkreis kann nur auf Basis der ERF/MRF-Komponenten aufgebaut bzw. adaptiv genutzt werden.

In den Figuren sind Ausführungsbeispiele der Erfindung dargestellt und die Erfindung wird anhand dieser dargestellten Ausführungsbeispiele näher erläutert. Es zeigen:
- Fig. 1:: in schematischer Darstellung ein Zweirad mit Dämpferkartusche integriert in die Vorderradgabel und Dämpferkartusche angeordnet zwischen Hinterradgabel und Rahmenelement;
- Fig. 2:: eine schematische Darstellung eines System-Regelkreises;
- Fig. 3:: in Schnittdarstellung die Dämpferkartusche mit Energierückgewinnungseinheit;
- Fig. 4:: ein Blockschaltbild des batteriebetriebenen Hochspannungsnetzteils.

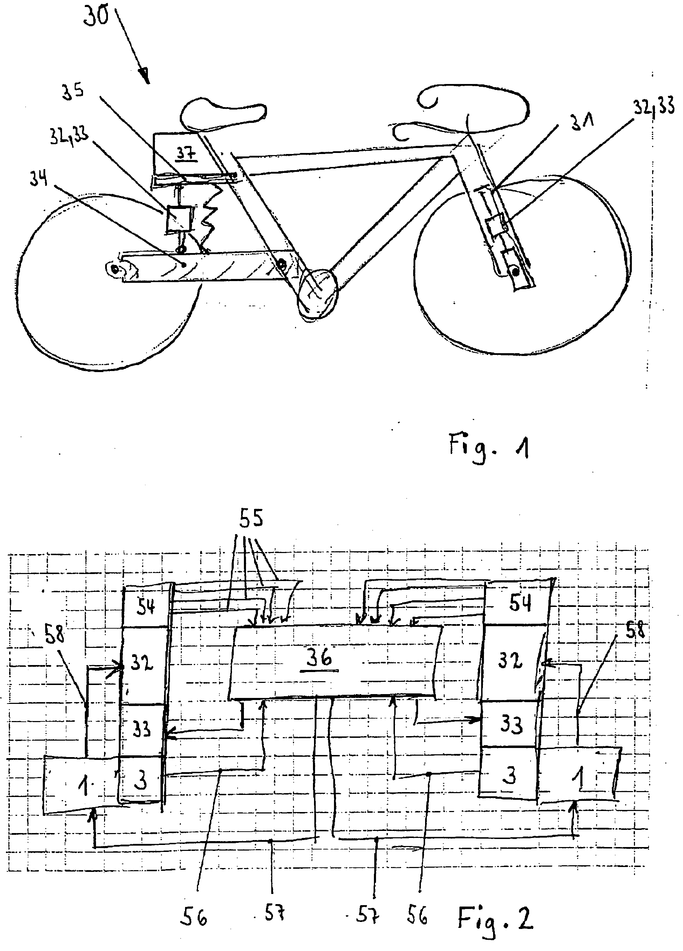

In Fig. 1 ist schematisch ein Zweirad 30 dargestellt, bei dem in die Vorderradgabel 31 einseitig oder auch rechts/links jeweils ein Schwingungsabsorptionssystem 32 (Dämpferkartusche)mit Energierückgewinnungseinheit 33 integriert angeordnet ist und im Bereich des Hinterrades zwischen Hinterradgabel 34 und einem mit dem Rahmen verbundenen Element 35 ein weiteres Schwingungsabsorptionssystem 32 mit Energierückgewinnungseinheit 33 angeordnet ist.

Weiterhin umfasst das Zweirad 30 neben den üblichen Fahrradbestandteilen, wie es schematisch dargestellt ist, ein batteriebetriebenes Hochspannungsnetzteil 1, eine System-Reglereinheit 36 (dargestellt als black-box) 37, sowie Sensoren (nicht dargestellt).

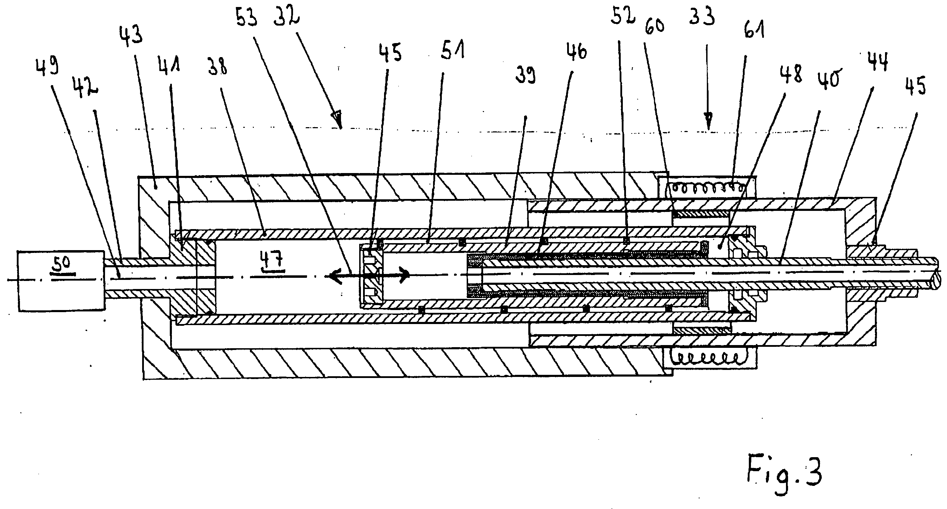

Die Dämpferkartusche 32 ist schematisch im Längsschnitt in Fig. 3 dargestellt und erfüllt Dämpfer- bzw. Aktorfunktionen mittels elektrorheologischer / magnetorheologischer Flüssigkeiten. Das zur Ansteuerung / Regelung der Dämpferkartusche 32 benötigte elektrische bzw. magnetische Feld wird mittels des batteriebetriebenen Hochspannungsnetzteils 1 erzeugt.

Diese im Längsschnitt in Fig. 3 dargestellte Dämpferkartusche 32 besteht aus einem rohrförmigen Zylindergehäuse 38 mit einem im Zylindergehäuse 38 axial verschiebbar gelagerten Wendelkolben 39. Der Kolben 39 ist mit einer Kolbenstange 40 verbunden, die einseitig aus dem Zylindergehäuse 38 herausgeführt ist und mit einer Seite einer Gabelbrücke einer Federgabel 31 verbunden ist. Auf der gegenüber liegenden Seite des Zylindergehäuses 38 ist ein Deckelelement 41 angeordnet, welches mit einem zylindrischen Abschnitt 42 ausgebildet ist und in einem das Zylindergehäuse 38 koaxial umgebenden zylindrischen äußeren Rohrabschnitt 43 fixiert ist.

Dieser äußere Rohrabschnitt 43 umgreift in etwa die gesamte Baulänge des Zylindergehäuses 38. Die aus dem Zylindergehäuse 38 abgedichtet herausgeführte Kolbenstange 40 ist an ihrem Endbereich in einer Stützhülse 44 mit Führungsfunktion in dessen Stirnseite 45 fixiert. Die Stützhülse 44 ist als rohrförmiger Abschnitt ausgebildet, wobei der rohrförmige Abschnitt koaxial zwischen Zylindergehäuse 38 und äußerem Rohrabschnitt 43 angeordnet und in den äußeren Rohrabschnitt 43 eingeschoben und über seine zylindrische Außenwandung an der zylindrischen Innenwandung des äußeren Rohrabschnittes 43 gleitend gelagert ist. Zwischen Außenwandung des Zylindergehäuses 38 und Innenwandung des rohrförmigen Abschnittes 44 verbleibt dabei ein radialer Spalt.

Der Kolben 39 ist als hohlzylindrisches Element ausgebildet, wobei das hohlzylindrische Element einseitig mittels eines Deckelelements 45 geschlossen ist. Die einseitig an dem Kolben 39 angeordnete Kolbenstange 40 ist unter Zwischenschaltung einer aus Isolationsmaterial bestehenden Hülse 46 in das hohlzylindrische Element 39 eingeschoben und fixiert.

Der Kolben 39 unterteilt das Zylindergehäuse 38 in zwei Druckmittelräume 47,48, wobei der eine Druckmittelraum 47 als zylindrischer Raum und der andere Druckmittelraum 48 als ringförmiger Raum ausgebildet ist. Die Druckmittelräume 47,48 sind mit elektrorheologischer bzw. magnetorheologischer Flüssigkeit als Druckmittel gefüllt. Zum Ausgleich des Kolbenstangenvolumens beim Verschieben des Kolbens 39 ist der zylindrische Druckmittelraum 47 über eine in das Deckelelement 41,42 eingebrachte Zylinderbohrung 49 mit einem Volumenausgleichselement 50 verbunden.

Zwischen Kolben 39 und Zylindergehäuse 38 wird ein wendelförmiger über ein elektrisches Feld beaufschlagbarer Strömungskanal 51 gebildet, der die Druckmittelräume 47,48 miteinander verbindet. Die Wendel 52 besteht aus einem Isolationsmaterial und liegt jeweils dichtend zwischen äußerer Mantelfläche des Kolbens 39 und innerer Mantelfläche der Zylinderkammer 38 an. Die den Strömungskanal 51 begrenzenden Mantelflächen sind jeweils als Elektrodenflächen ausgebildet. Aufgrund des beschriebenen Aufbaus steht die zylindrische Druckmittelkammer 47 über den elektrisch ansteuerbaren Strömungskanal 51 mit der ringförmigen Druckmittelkammer 48 in Verbindung. Die Viskosität der elektrorheologischen /magnetorheologischen Flüssigkeit kann in dem Strömungskanal 51 über ein von dem batteriebetriebenen Hochspannungsnetzteil 1 erzeugten elektrischen Spannungssignal gesteuert werden. Mittels Ansteuerung des Strömungkanals 51 kann nun gezielt die gewünschte Dämpfung erreicht werden.

Betrachtet man die Radnabe des Vorderrades als in Vertikalrichtung fixiert, so wird über die Gabelbrücke die Bewegung der gefederten Masse eingeleitet. Diese Relativbewegung zwischen Gabelbrücke mit darin befestigtem Kolben 39 und dem Zylindergehäuse 38, welches mit der Radnabe in Verbindung steht, bewirkt je nach Richtung, d.h. Zug- bzw. Druckhubrichtung (Doppelpfeil 53) ein Verdrängen der elektrorheologischen Flüssigkeit aus der einen Druckmittelkammer 47 durch den wendelförmigen Strömungskanal in die andere Druckmittelkammer 48.

Stöße, die über das Rad eingeleitet werden bzw. andere auftretende Störgrößen, werden über Sensoren 54 erfasst. Es können hierbei Sensoren zum Messen von kinetischen und/oder kinematischen Größen eingesetzt werden. Die ermittelten Sensorsignale 55 werden dann als Eingangsgrößen der in Fig. 2 dargestellten System-Reglereinheit 36 zugeführt. Weiterhin werden der System-Reglereinheit 36 Signale 56 der Batterie 3 zugeführt, die den Ladezustand repräsentieren. Die System-Reglereinheit 36 erzeugt entsprechende Steuersignale 57, die zu dem Hochspannungsnetzteil 1 geführt werden. Das Hochspannungsnetzteil 1 liefert die entsprechende Steuerenergie 58 zur Einstellung des elektrischen bzw. magnetischen Feldes im Strömungskanal der Dämpferkartusche 32 bzw. für mehrere Dämpferkartuschen vorne/hinten. Weiterhin erzeugt die System-Reglereinheit 36 ein Signal 59, das der Energierückgewinnungseinheit 33 den Ladezustand der Batterie 3 anzeigt. Die Energierückgewinnungseinheit 33 ist in der Dämpferkartusche 32 integriert, wobei sie vorteilhafterweise als Tauchspulenanordnung realisiert ist und die beim Fahren auftretenden in Längsrichtung wirkenden Schwingungen in elektrische Energie umwandelt. Hierfür ist, wie es schematisch in Fig. 3 gezeigt ist, an der Innenwandung des mit der Kolbenstange 40 verbundenen rohrförmigen Abschnitts 44 ein ringförmiger Permanentmagnet 60 angeordnet. An dem zylindrischen äußeren Rohrabschnitt 43, der sich bei Einleitung von Längskräften relativ zu dem rohrförmigen Abschnitt 44 bewegt, ist eine Spule 61 angeordnet.

Die in der Beschreibung als Zweiräder 30 bezeichneten Fahrzeuge umfassen auch Fahrräder die mit einem Elektrohilfsantrieb ausgestattet sind.

Des Weiteren werden auch drei oder vierrädrige Fahrräder umfasst.

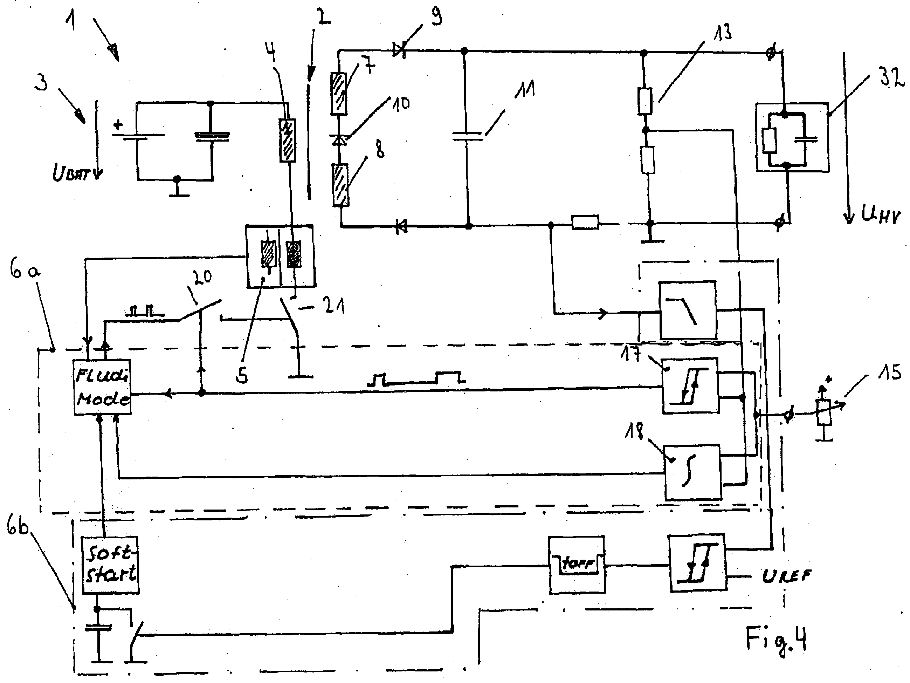

In Fig. 4 der Zeichnung ist ein Hochspannungsnetzteil 1 zur Ansteuerung der Dämpferkartuschen 32 schematisch dargestellt, das mit einem vorgegebenen Sollwertverlauf geringerer Steuerspannung den Hochspannungsausgangsverlauf steuert und regelt. Für die Hochspannungserzeugung ist ein Hochspannungstrafo 2 vorgesehen, dessen Ausgangshochspannung Uₐ primär- und sekundärseitig so geregelt wird, dass der Ausgangsspannungsverlauf dem Sollwertverlauf weitgehend unverzerrt folgt.

Das Hochspannungsnetzteil 1 ist als Schaltnetzteil ausgebildet und wird mit Batteriespannung betrieben. Die Batteriespannung wird einer Hochspannungswandlerschaltung zugeführt, die als Hochspannungstrafo 2 ausgebildet ist und aus einem Primärkreis und einem Sekundärkreis besteht. Der Primärkreis verfügt über eine Primärwicklung 4, einen Stromwandler 5 und eine Steuer / Regelschaltung 6a, die den Primärkreis mit einer Schaltfrequenz von 60 kHz taktet. Dabei besteht die Steuer / Regelschaltung 6a, die einen DigitalRegler 17, einen Differenzintegrator 18 als Analogregler und eine Current-Mode-Steuerschaltung 6 umfasst. Mit 6b wird eine Einschaltsteuerschaltung mit Stromüberwachung bezeichnet.

Sekundärseitig enthält der Hochspannungstrafo 2 mindestens zwei Sekundärwicklungen 7, 8, die in Reihe geschaltet und zusätzlich durch mindestens eine in Reihe geschaltete Ladediode 10 wechselstrommäßig entkoppelt sind. Parallel zu den Sekundärwicklungen 7, 8 ist ein Ladekondensator 11 vorgesehen, der mit zwei Ladedioden 9 in Reihe geschaltet ist.

Da durch den Hochspannungstrafo 2 sekundärseitig Hochspannungen von mindestens 5.000 V erzeugt werden müssen, ist eine besondere Hochspännungsisolation notwendig. Dadurch werden üblicherweise die Wickelabstände erhöht, was zu einer höheren Streuinduktivität und niedriger Wickelkapazität führt. Die hohen Windungszahlen der Hochspannungswicklungen bewirken bei üblicher Wickeltechnik große Wickelkapazitäten, wodurch derartige Hochspannungstrafos verhältnismäßig tieffrequente Resonanzen aufweisen, die im Frequenzbereich der Taktfrequenz des Wandlers liegen, und damit eine Current Mode Steuerung erschweren. Deshalb schlägt die Erfindung vor, diese schwingungsverursachenden Induktivitäten 7, 8 durch Ladediode 10 zu entkoppeln und gleichzeitig die Wickelkapazitäten als Ladekapazität zu nutzen, um insbesondere die Traforesonanzfrequenz bei geringer Streuinduktivität zu erhöhen. Dazu werden sekundärseitig mehrere Wicklungen 7, 8 mit Ladedioden 9, 10 in Reihe geschaltet, durch die Anteile der Wicklungskapazitäten in Ladekapazitäten umgewandelt werden. Somit trägt die Wickelkapazität nur noch unwesentlich zum Schwingverhalten des Hochspannungstrafos 2 bei.
Durch eine hohe Schalttaktfrequenz von 60 kHz ist vorteilhafterweise ein verhältnismäßig geringer Klirrfaktor für Frequenzen bis 300Hz erreichbar. Die Sekundärwicklungen 7, 8 sind mit einem separaten Ladekondensator 11 verschaltet, der während des Schalttaktbetriebs auf die induzierte Hochspannung aufgeladen wird. Um die IST-Spannung für die Regelung zu erzeugen, ist im Ausgang des Sekundärkreises eine Spannungsteilerschaltung 13 vorgesehen, an der ein Spannungswert erfassbar ist, der dem Ausgangsspannungsverlauf Ua proportional ist und diesem in einem vorgegebenen Verhältnis entspricht.

Am Ausgang des Netzteils 1 ist als Verbraucher die Dämpferkartusche 32 mit elektrorheologischer Flüssigkeit als ohmsche und kapazitive Last angeordnet. Durch dieses Netzteil wird somit der Durchfluss der elektrorheologischen Flüssigkeit im Strömungskanal 51 steuerbar gestaltet. Dazu wird mittels einer Hochspannung zwischen den Elektrodenflächen ein elektrisches Feld erzeugt, durch das die Viskosität der durchfließenden, oder beispielsweise dämpfenden elektrorheologischen Flüssigkeit beeinflusst wird. Derartige ERF-Verbraucher stellen somit gemischt kapazitive ohmsche Lasten dar, die die externe Belastung des Netzteils 1 darstellen.

Solche Dämpferkartuschen 32 werden je nach konstruktiver Ausgestaltung mit einer Steuerspannung Uₐ von meist 200 bis 5.000 V betrieben. Dabei wird die Niedervoltsteuerspannung, das ist der Sollwert, meist als schwankende Gleichspannung vorgegeben, der Spannungsverlauf die zu steuernden Spannungszustände des Hochspannungsverbrauchers beschreibt. Dieser Niederspannungsverlauf Uₛ kann beispielsweise einen Rechteckspannungsverlauf darstellen, der die Schaltzustände eines ERF-Ventils beschreibt. Dieser Niederspannungsverlauf Uₛ kann aber auch von Sensoren abgeleitet werden, deren Spannung in Hochspannung zur Steuerung der Dämpferkartusche 32 umgewandelt wird. Dabei ist es häufig erforderlich, dass der hochspannungsmäßige Ausgangsspannungsverlauf Uₐ der niedervoltigen Eingangssteuerspannung Uₛ möglichst verzerrungsfrei folgt, wobei diese Steuerungen einen Frequenzgang bis 300 Hz besitzen können. Da die Eingangssteuerspannungen Uₛ häufig in einem Bereich von 0 bis 5 V liegen, sind Spannungsverstärkungen von 1.000 und mehr erforderlich. Die Hochspannung wird dabei ohne Phasenfehler zur Sollspannung erzeugt.

Am Netzteil 1 ist ein separater Sollspannungsanschluss 15 vorgesehen, an den die Eingangssteuerspannung Uₛ bzw. der Sollspannungsverlauf anlegbar ist, durch die der Ausgangshochspannungsverlauf Uₐ gesteuert wird. Dieser Sollspannungsanschluss 15 ist in einer Steuer- und Regelschaltung an einen Regelkreiskomparator 17 und einen Differenzregelintegrator 18 eingangsseitig herangeführt. Weiterhin sind der Komparator 17 und der Differenzintegrator 18 noch mit dem Hochspannungsteiler 13 im Sekundärkreis verbunden, so daß durch diese gleichzeitig ein vorgegebenes Verhältnis der jeweiligen Ausgangsspannung Uₐ erfassbar ist.

Wird nun eine positive Mischspannung auf den Sollspannungsanschluss 15 gelegt, so vergleicht der Regelkreiskomparator 17 die Sollspannung Uₛ mit dem am Spannungsteiler 13 erfassten Verhältnis zur Ausgangsspannung Ua.

Der Regelkreiskomparator vergleicht die 1000:1 geteilte Hochspannung mit der Vorgabe / Sollspannung und schaltet abhängig vom Triggerergebnis den Primärtakt ein oder aus.

Der Differenzregelintegrator bildet ein von der Differenzspannung zwischen Soll und IST abgeleitetes Steuersignal, welches der Current-Mode-Schaltung 6 zugeführt wird.

Weiterhin wird der Current-Mode-Regelschaltung 6 über einen Stromwandler 5 ein Signal zugeführt, das dem Primärstrom proportional ist. Aus diesen Steuersignalen bildet der Steuer/Regelkreis den Primärkontakt, der abhängig vom Ergebnis des Regelkreiskomparators 17 den Primärschalter 21 über den Schalter 20 ein oder ausschaltet.

In die Regel- Steuerschaltung 6a ist die Dämpferstromüberwachung 6b integriert. Der Dämpferstrom wird über den Messwiderstand als proportionale Spannung erfasst. Diese wird über ein zweipoliges Filter gemittelt und zeitverzögert und über den Stromkomparator mit einem Vorgabewert verglichen. Überschreitet der gemittelte Dämpferstrom den Sollwert, so schaltet der Stromkomparator die Hochspannung aus. Nach einer Verzögerungszeit startet die Hochspannung erneut mit Softstart. Dieses Ein- und Ausschalten der Hochspannung geschieht so oft, bis der Dämpferstrom sich wieder im zulässigen Bereich befindet.

Das in Fig. 4 dargestellte Hochspannungsnetzteil stellt somit die derzeit einzige Möglichkeit einer geschlossenen Regelung für Dämpfung und Energierückgewinnung im Zweiradbereich dar, da Betriebssicherheit und Energiesparen optional verknüpft werden können.

## Patentansprüche

1. Fahrrad (30) mit einem geregelten aktiven-passiven Schwingungsabsorptionssystem, wobei das Schwingungsabsorptionssystem umfasst:
- mindestens einen Schwingungsdämpfer auf Basis von elektrorheologischen / magnetorheologischen Flüssigkeiten, der aus einer Dämpferkartusche (32) besteht, die als Einrohrdämpfer mit in einem Zylindergehäuse (38) verschiebbar gelagerten Kolben (39) mit Kolbenstange (40) ausgebildet ist und in der integriert ein elektrorheologisches / magnetorheologisches Ventil angeordnet ist,
- einen Systemregelkreis (36), dem Sensorsignale (54) zugeführt werden und der Steuersignale (57) an ein elektrisches Hochspannungsnetzteil (1) liefert, wobei das Hochspannungsnetzteil (1) die entsprechende Steuerenergie (58) für das elektrorheologische / magnetorheologische Ventil der Dämpferkartusche (32) bereitstellt, und
- eine Versorgungseinheit (3), in der die elektrische Energie zum Betreiben des Schwingungsabsorptionssystems gespeichert ist,
und wobei der mindestens eine Schwingungsdämpfer (32) in der Vorderradgabel (31) integriert ist,
**dadurch gekennzeichnet,**
**dass** mindestens ein weiterer gleich ausgebildeter Schwingungsdämpfer (32) zwischen Hinterradgabel und Rahmenelement vorgesehen ist,
**dass** das elektrorheologische / magnetorheologische Ventil einen ansteuerbaren mit einem elektrischen / magnetischen Feld beaufschlagbaren Strömungskanal (51) als wendelförmiger Strömungskanal (51) zwischen Kolbenaußenfläche und Zylinderinnenwandung aufweist,
**dass** dem Systemregelkreis (36) Signale (56) zugeführt werden, die ein Maß für die in der Versorgungseinheit (3) gespeicherten elektrischen Energie darstellen,
**dass** sowohl die Dämpferkartusche (32) in der Vorderradgabel (31) als auch die Dämpferkartusche (32) zwischen Hinterradgabel und Rahmenelement eine Energierückgewinnungseinheit (33) als Tauchspulenanordnung aufweist, die mit der Dämpferkartusche (32) jeweils eine Einheit bildet,
**dass** die mittels der Energierückgewinnungseinheit (33) aus den in Längsrichtung auftretenden Störschwingungen umgewandelte elektrische Energie der Versorgungseinheit (3) zugeführt wird und
**dass** die Versorgungseinheit (3) eine Batterie aufweist.

## Claims

1. Bicycle (30) with controlled active-passive vibration absorption system,
wherein said vibration absorption system comprises:
- at least one vibration damper based on electrorheological/magnetorheological fluids, consisting of a damper cartridge (32), which is designed as a single-tube damper with piston (39) and piston rod (40) slidably mounted in a cylinder housing (38), and in which an electrorbeological/magnetorheological valve is integrally provided,
- a system control loop (36) receiving sensor signals (54) and transmitting control signals (57) to an electrical high-voltage power unit (1), whereby the high-voltage power unit (1) provides the necessary control energy (58) for the electrorheological /magnetorheological valve in the damper cartridge (32), and
- a supply unit (3) in which electrical energy for operating the vibration absorption system is stored,
and wherein said at least one vibration damper (32) is integrated in the front wheel fork (31)
**characterized in that**
at least one further, identically designed vibration damper (32) is provided between the rear wheel fork and the frame member,
the electrorheological / magnetorheological valve has a controllable flow channel (51) to which an electrical / magnetic field can be applied, designed as a helical flow channel (51) and located between the outer surface of the piston and the inner cylinder wall surface,
signals (56) are supplied to the system control loop (36), which serve as a measure of the electrical energy stored in the supply unit (3),
both the damper cartridge (32) in the front wheel fork and the damper cartridge (32) between the rear wheel fork and the frame member have an energy recovery unit (33) in the form of a moving-coil arrangement, each of these forming an integral unit with the damper cartridge (32),
energy converted by means of the energy recovery unit (33) from the parasitic vibrations occurring in the longitudinal direction is supplied to the supply unit (3), and
the supply unit (3) has a battery.

## Revendications

1. Bicyclette (30) équipée d'un système actif-passif contrôlé d'absorption des vibrations, le système d'absorption des vibrations englobant :
- au moins un amortisseur de vibrations sur la base de liquides electrorhéologiques/magnétorhéologiques, constitué par une cartouche d'amortisseur (32) constituée comme un amortisseur monotube avec un piston (39) et avec une tige de piston (40) à montage coulissant dans un boîtier cylindrique (38) et dans lequel est intégrée une soupape électrorheologique / magnétorhéologique,
- un circuit de commande de système (36), auquel seront envoyés les signaux du capteur (54) et qui délivrera des signaux de commande (57) à un bloc d'alimentation à haute tension (1), cependant que le bloc d'alimentation à haute tension (1) fournit l'énergie de commande correspondante (5) pour la soupape électrorheologique / magnétorhéologique de la cartouche d'amortisseur (32), et
- une unité d'alimentation (3), dans laquelle est stockée l'énergie électrique pour la mise en service du système d'absorption des vibrations,
et où au moins un amortisseur de vibrations (32) est intégré dans la fourche de la roue avant (31),
**caractérisé en ce que**,
au moins un autre amortisseur de vibrations de configuration semblable (32) est prévu entre la fourche de la roue arrière et l'élément du cadre,
que la soupape électrorhéologique / magnétorhéologique présente entre la surface extérieure du piston et la paroi interne du cylindre un canal d'écoulement (51) sollicité par un champ électrique/magnétique réglable, configuré en tant que canal d'écoulement hélicoldal (51),
que des signaux (56) représentant une unité de mesure pour l'énergie électrique stockée dans l'unité d'alimentation (3) sont adressés au circuit de régulation du système (36),
que tant la cartouche d'amortisseur (32) dans la fourche avant de la roue avant (31), que la cartouche d'amortisseur (32) entre la fourche de la roue arrière et l'élément du cadre, font chacune fonction d'unité de récupération d'énergie (33), configurée en tant que bobine mobile, formant chacune un bloc unitaire avec la cartouche amortisseur (32),
que, au moyen du bloc de récupération d'énergie (33), l'énergie électrique transformée résultant des vibrations parasites longitudinales est redirigée vers le bloc d'alimentation (3)
et
que le bloc d'alimentation (3) est équipé d'une batterie.
